# DEMANDE DE BREVET EUROPEEN

(11) **EP 2 433 791 A1**
(43) Date de publication de la demande: **28.03.2012**
(21) Numéro de dépôt: 10306068.7
(22) Date de dépôt: 30.09.2010
(51) Int. Cl.: B32B 7/06

(54) **Cale d'épaisseur réglable résistant aux températures élevées et procédé d'obtention de ladite cale.**

(30) Priorité: 24.09.2010 EP 10179440
(71) Demandeur: Gastel, Daniel André, 78370 Plaisir les Gatines (FR)
(72) Inventeur: Gastel, Daniel André, 78370 Plaisir les Gatines (FR)
(74) Mandataire: Thinat, Michel

(57) **Abrégé**

La cale d'épaisseur (10) comprend un empilement de feuilles (1, 2, 3) qui comportent une force de résistance au déchirement prédéterminée, fixées les unes sur les autres par un matériau liant qui procure une force de cohésion entre les feuilles élevée mais inférieure à la force de résistance au déchirement. De cette manière, un effort supérieur à la force de cohésion, appliqué sur une feuille extérieure de l'empilement, permet de peler la feuille extérieure sans la déchirer. La force de résistance au déchirement et la force de cohésion sont maintenues jusqu'à une température de transition d'état (Tg) supérieure à 200°C et l'épaisseur de la cale est dans un rapport constant à la quantité de feuilles de la cale tant qu'une température de la cale est inférieure à la température de transition d'état (Tg).

## Description

L'invention concerne en général les produits stratifiés.

Plus précisément, l'invention concerne, selon un premier aspect, un produit stratifié présentant une épaisseur réglable par délitage, ce produit comprenant un empilement de feuilles présentant chacune une résistance intrinsèque au déchirement, et adhérant l'une à l'autre par une force de liaison plus faible que la résistance des feuilles au déchirement, ce dont il résulte que chaque feuille peut être détachée de l'empilement sans se déchirer.

Des produits de ce type sont enseignés dans le brevet d'invention FR2831095B1, et sont notamment utilisés comme cales de réglage pour des ensembles mécaniques. Ces ensembles mécaniques présentent généralement des jeux importants en certains points, résultant de la combinaison des tolérances de fabrication. Ces jeux ou écarts sont compensés en insérant des cales.

L'épaisseur de ces cales est ajustée en retirant les feuilles avant ou arrières une à une, jusqu'à ce que l'épaisseur recherchée soit atteinte.

L'utilisation des cales d'épaisseur connues, est cependant limitée par la tenue en température du liant des feuilles. Les cales pelables à base de résine époxy sans additif sont généralement garanties en tenue en température jusqu'à 200°C. A des températures supérieures, une dégradation du liant ne permet plus à la cale de maintenir ses fonctions de manière satisfaisantes. Le problème qui se pose est de compenser des jeux dans des domaines de fonctionnement à température élevée, notamment au-delà de 200°C.

De manière plus générale, le problème posé est celui de procurer un matériau approprié pour les secteurs industriels dans lesquels se fait ressentir un besoin pour un matériau hautement résistant mécaniquement et thermiquement.

Pour remédier au problème posé, l'invention a pour objet une cale d'épaisseur comprenant un empilement de feuilles qui comportent une force de résistance au déchirement prédéterminée, fixées les unes sur les autres par un matériau liant qui procure une force de cohésion entre les feuilles élevée mais inférieure à ladite force de résistance au déchirement de sorte qu'un effort supérieur à ladite force de cohésion, appliqué sur une feuille extérieure de l'empilement, permet de peler ladite feuille extérieure sans la déchirer. La cale d'épaisseur est remarquable en ce que ladite force de résistance au déchirement et ladite force de cohésion sont maintenues jusqu'à une température de transition d'état supérieure à 200°C et en ce que l'épaisseur de la cale est dans un rapport constant à la quantité de feuilles de la cale tant qu'une température de la cale est inférieure à ladite température de transition d'état.

De préférence, ladite température de transition d'état est supérieure ou égale à 380°C.

Avantageusement, ladite température de transition d'état est supérieure ou égale à 400°C.

Particulièrement, le matériau liant comprend un polymère de type cyanate ester.

Particulièrement aussi, le matériau liant comprend un polymère de type phénylsilicone ou polyphénylsilsesquioxane.

Particulièrement encore, le matériau liant comprend un polymère de type polystyrylpyridine.

Particulièrement encore, le matériau liant comprend une résine époxy combinée avec un additif, notamment à base de brome ou de bisphénols comprenant une chaîne aromatique.

Alternativement, le matériau liant comprend un géopolymère de type aluminosilicate.

Selon un premier mode de réalisation, les feuilles sont en métal.

Selon un deuxième mode de réalisation, les feuilles comprennent des fibres tissées imprégnées du matériau liant.

L'invention a aussi pour objet un procédé d'obtention d'une cale d'épaisseur comprenant des étapes consistant à :
- sélectionner un matériau liant comportant une température de transition d'état supérieure à 200°C ;
- enduire des feuilles qui comportent une force de résistance au déchirement prédéterminée, avec le matériau liant ;
- empiler les feuilles enduites les unes sur les autres ;
- soumettre l'empilement ainsi obtenu à des cycles de pressions et de températures qui réticulent le matériau liant de façon à procurer une force de cohésion entre les feuilles élevée mais inférieure à ladite force de résistance au déchirement permettant de peler une feuille extérieure de l'empilement sans la déchirer en lui appliquant un effort supérieur à ladite force de cohésion, et de façon à maintenir l'épaisseur de la cale dans un rapport constant à la quantité de feuilles, ladite force de résistance au déchirement et ladite force de cohésion tant qu'une température de la cale est inférieure à ladite température de transition d'état.

Particulièrement, le matériau liant est sélectionné parmi les polymères de type cyanate ester, les polymères de type phénylsilicone ou polyphénylsilsesquioxane, de type polystyrylpyridine, parmi les polymères de type époxy combiné avec un additif, notamment à base de brome ou de bisphénols comprenant une chaîne aromatique ou parmi les géopolymères de type aluminosilicate qui permettent d'atteindre une température de transition d'état supérieure ou égale à 200°C, notamment supérieure ou égale à 380°C.

Avantageusement, la température de transition d'état est supérieure ou égale à 400°C.

Plus particulièrement, les étapes consistant à soumettre l'empilement à des cycles de pressions et de températures comprennent des étapes consistant à :
- mettre l'empilement sous presse dans une étuve et monter la température de l'étuve avec un gradient initial de montée contrôlée en fonction de la masse mise en étuve jusqu'à un palier initial de température comprise entre 130°C et 150°C, maintenu pendant un intervalle de temps initial d'autant plus élevé que la masse mise en étuve est élevée ;
- monter la température de l'étuve avec un gradient final de montée contrôlée en fonction de la masse mise en étuve jusqu'à un palier final de température comprise entre 300°C et 320°C, maintenu pendant un intervalle de temps final d'autant plus élevé que la masse mise en étuve est élevée ;
- descendre la température de l'étuve avec un gradient final de descente contrôlée en fonction de la masse mise en étuve jusqu'à température ambiante.

Plus particulièrement encore, les étapes consistant à soumettre l'empilement à des cycles de pressions et de températures comprennent en outre des étapes consistant à :
- descendre à partir du palier initial de température, la température de l'étuve avec un gradient intermédiaire de descente contrôlée en fonction de la masse mise en étuve jusqu'à température ambiante ;
- mettre l'empilement hors presse ;
- monter la température de l'étuve avec un gradient intermédiaire de montée contrôlée en fonction de la masse mise en étuve jusqu'à un palier intermédiaire de température comprise entre 130°C et 150°C, maintenu pendant un intervalle de temps intermédiaire d'autant plus élevé que la masse mise en étuve est élevée.

Dans certains modes de mise en oeuvre, les étapes consistant à soumettre l'empilement à des cycles de pressions et de températures comprennent en outre une étape consistant à injecter un gaz neutre dans l'étuve.

D'autres caractéristiques et avantages de l'invention ressortiront clairement de la description qui en est faite ci-dessous, à titre indicatif et nullement limitatif, en référence aux dessins annexés dans lesquels :
- la figure 1 est une vue en perspective éclatée d'un produit stratifié composite obtenu par un procédé conforme à l'invention ;
- la figure 2 est une vue en perspective éclatée d'un produit stratifié métallique obtenu par un procédé conforme à l'invention.

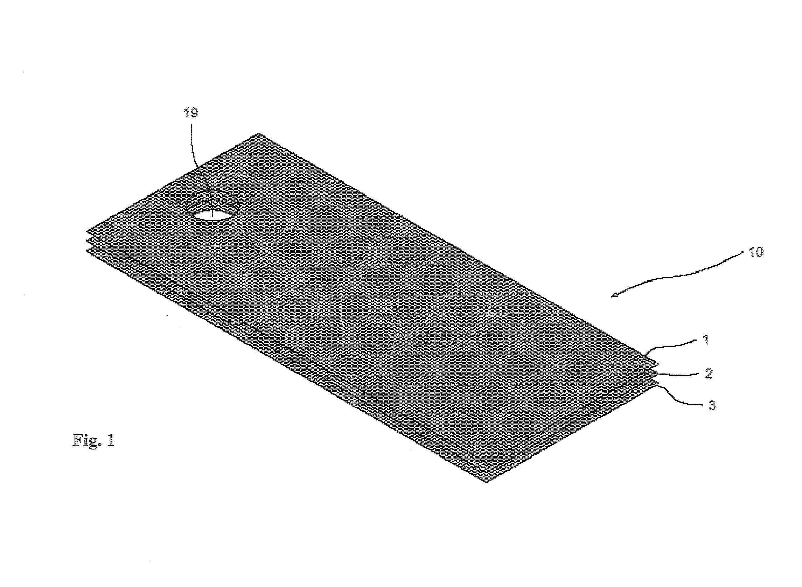

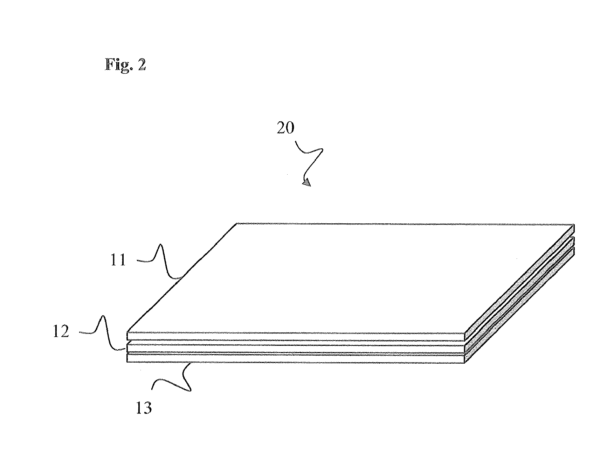

La figure 1 montre un produit stratifié, plus précisément une cale d'épaisseur 10 constituée par un empilage de feuilles 1, 2, 3 de matériau tissé. La figure 2 montre un produit stratifié, plus précisément une cale d'épaisseur 20 constituée par un empilage de feuilles 11, 12, 13 de métal. Le procédé que nous allons décrire à présent dans ses différentes variantes, permet d'obtenir un produit stratifié usinable à souhait, par exemple pour le tailler dans les formes qui conviennent à son utilisation, comme illustré par un trou 19 percé avec un degré de finition comparable à celui obtenu dans du métal.

Le procédé de fabrication qui va être décrit permet aussi d'obtenir un produit stratifié à haute résistance thermomécanique, en d'autres termes qui conserve une bonne tenue mécanique lorsqu'il est soumis à des hautes températures, y compris en présence de chocs violents.

De façon à ce que le produit stratifié soit utilisable comme cale d'épaisseur jusqu'à des températures qui peuvent dépasser 200°C et atteindre 280°C, 370°C, 380°C, voire 400°C ou plus, le produit stratifié conserve ses qualités de rigidité, notamment en termes de planéité et d'incompressibilité au moins jusqu'à et de préférence au-delà de ces températures.

Le procédé d'obtention de la cale d'épaisseur 10 comprend une première étape consistant à sélectionner un matériau liant qui comporte une température de transition d'état Tg supérieure à 200°C, 380°C, 400°C ou plus, en fonction de la tenue en température de la cale attendue.

La température de transition d'état est celle en dessous de laquelle les propriétés mécaniques des matériaux constituant la cale, sont identiques à celles que ces matériaux présentent à température ambiante courante. La transition d'état peut correspondre à un passage de phase solide à phase liquide, la température de transition d'état est alors une température de fusion. A titre illustratif, la température de fusion du fer est de l'ordre de 1538°C, celle de l'aluminium est de l'ordre de 661°C. La transition d'état peut aussi correspondre à un passage de phase vitreuse rigide à phase visqueuse, la température de transition d'état est alors une température de transition vitreuse. La transition d'état peut encore correspondre à une transformation chimique résultant ou non d'une combustion, la température de transition d'état est alors le point de combustion ou le point de décomposition selon le cas.

Le matériau liant peut être sélectionné parmi les polymères de type de type polystyrylpyridine à condition toutefois de prendre garde au comportement complexe de ces polymères en présence d'humidité, parmi les polymères phénylsilicone ou polyphénylsilsesquioxane qui permettent d'atteindre des températures d'utilisation dépassant 420°C sans dégradation. Le matériau liant peut aussi être sélectionné parmi les géopolymères de type aluminosilicate dont la matrice minérale permet de résister à de hautes températures proches de 1000°C.

Il est déjà possible d'augmenter la température de transition d'état de résines époxy au-delà de 200°C en combinant des additifs, notamment à base de brome ou de bisphénols comprenant une chaîne aromatique.

Parmi d'autres matériaux liants comportant une température de transition d'état Tg supérieure ou égale à 400°C, les résines de type cyanate ester présentent l'avantage d'un faible coût et d'une faible volatilité de ses composants.

Une deuxième étape consiste à enduire les feuilles 1, 2, 3 avec le matériau liant sous forme de monomères, d'oligomères ou de poudres.

On peut utiliser des feuilles constituées de lames métalliques dont on enduit alors la surface par une fine couche du matériau liant. Les lames métalliques comportent une force de résistance au déchirement prédéterminée par le module de Young et le module de cisaillement du métal et par l'épaisseur de la lame métallique.

On peut aussi utiliser des feuilles comprenant des nappes de fibres tissées de verre, de carbone ou autre dont l'enduction provoque une imprégnation des nappes. Les nappes de fibres tissées comportent une force de résistance au déchirement prédéterminée par la résistance à la rupture des fibres et la densité de fibres dans les nappes. Les nappes de fibres tissées présentent l'avantage d'être généralement plus légères et moins blessantes que les lames métalliques.

Une troisième étape consiste à empiler les feuilles enduites les unes sur les autres en veillant à la planéité de l'empilement qui garantira à l'issue du procédé, une aptitude de la cale à combler précisément un espace entre deux surfaces planes qui est proportionnel à un nombre de feuilles empilées.

Une ou plusieurs étapes consistent ensuite à soumettre l'empilement ainsi obtenu à des cycles de pressions et de températures qui réticulent le matériau liant.

La réticulation est exécutée de façon à procurer une force de cohésion entre les feuilles élevée mais inférieure à la force de résistance au déchirement de sorte qu'il est possible de peler une feuille extérieure de l'empilement sans la déchirer en lui appliquant un effort supérieur à la force de cohésion. La réticulation doit être totale et irréversible de façon à ce que le matériau liant soit dans un état solide exempt d'une quelconque élasticité. Après réticulation, la séparation d'une feuille hors de la pile se fera par micro cassures des chaînes réticulées à l'intérieur du matériau liant sans pégosité rémanente car tout bourrelet résultant d'un recollage intempestif nuirait à la planéité de la cale et par conséquent à la garantie d'épaisseur en fonction du nombre de feuilles.

La réticulation est aussi exécutée de façon à maintenir l'épaisseur de la cale dans un rapport constant à la quantité de feuilles, la force de résistance au déchirement et la force de cohésion de manière stabilisée lorsque de la cale obtenue par le procédé sera utilisée ultérieurement dans des plages de températures qui restent inférieures à la température de transition d'état Tg. Notamment, il est important que l'empilement de feuilles garde son caractère d'incompressibilité tant que la température n'atteint pas la température de transition d'état, de façon à ce que l'épaisseur ne dépende que de la quantité de feuilles dans l'empilement.

Dans un mode de réalisation préférée, un processus de réticulation par cuisson en suivant un ou plusieurs cycles de mise en pression et en température, comprend une succession d'opérations au moins aussi déterminante que la composition du matériau liant lui-même, pour obtenir une température de transition Tg désirée.

Une opération initiale consiste à mettre l'empilement sous presse dans une étuve et à monter la température de l'étuve avec un gradient initial de montée contrôlée en fonction de la masse mise en étuve. Selon le type de cale que l'on souhaite réaliser, notamment en termes de taille, les dimensions de la surface et de l'épaisseur de l'empilement peuvent varier. La masse mise en étuve varie en conséquence. Connaissant ou mesurant préalablement les coefficients de conductivité thermique et la capacité calorifique massique mis en jeu par la masse mise en étuve, l'homme du métier utilise les lois connues de la thermodynamique pour calculer le meilleur gradient thermique qui concilie deux exigences de fabrication. La première exigence est celle d'obtenir une homogénéité de température adaptée pour l'ensemble de la masse pendant la montée en température. La deuxième exigence est celle d'obtenir des temps de cycles acceptables en termes de productivité. L'homme du métier pourra ensuite affiner la valeur du gradient par des essais sur des cales de test. On comprendra qu'une valeur de gradient est généralement plus basse pour une valeur de masse plus élevée. A titre purement illustratif et non limitatif, un gradient est compris entre 1°C/min et 3°C/min pour une masse de quelques grammes.

La montée en température est effectuée jusqu'à un palier initial de température comprise entre 130°C et 150°C. Le pallier de température est maintenu pendant un intervalle de temps initial qui lui aussi dépend de la masse. On comprendra que l'énergie interne de transformation du matériau est d'autant plus élevée que la masse de matériau est élevée. La durée du pallier est modulée en conséquence. A titre purement illustratif et non limitatif, un pallier est maintenu pendant un intervalle de temps compris entre 30 minutes et 90 minutes pour une masse de quelques grammes.

Une opération terminale consiste à monter la température de l'étuve avec un gradient final de montée contrôlée en suivant des conditions thermiques et thermodynamiques semblables à celles exposées ci-dessus. Toujours dans le cas de l'exemple purement illustratif et non limitatif évoqué ci-dessus, le gradient est compris entre 2°C/min et 4°C/min jusqu'à un palier final de température comprise entre 300°C et 320°C. Le palier de température maintenu ici encore pendant un intervalle de temps final qui prend en compte la masse mise en étuve qui à titre illustratif pour quelques grammes, est compris entre 30 minutes et 90 minutes.

Une opération finale consiste à descendre la température de l'étuve avec un gradient final de descente contrôlée compris, par exemple encore entre 4°C/min et 6°C/min jusqu'à température ambiante. La valeur du gradient doit pouvoir être modulée de façon suffisamment flexible pour optimiser la descente en fonction de la masse.

Le respect de montées et de descentes en température progressives et de paliers de températures suffisamment long est important pour évacuer les molécules d'oxygènes généralement présentes en grand nombre dans la composition de nombreux matériaux liants appartenant à la classe des résines, de façon à éviter une carbonisation qui conduirait à un échec dans l'atteinte du but recherché qui est celui de garantir une tenue à des températures élevées.

Dans ce but, une première opération intermédiaire consiste à descendre à partir du palier initial de température, la température de l'étuve avec un gradient intermédiaire de descente contrôlée en fonction de la masse qui, à titre illustratif est compris entre 2°C/min et 4°C/min pour quelques grammes, jusqu'à température ambiante.

Une deuxième opération intermédiaire consiste à mettre l'empilement hors presse à l'intérieur de l'étuve.

Une troisième opération consiste à monter la température de l'étuve avec un gradient intermédiaire de montée contrôlée compris par exemple entre 2°C/min et 4°C/min jusqu'à un palier intermédiaire de température comprise entre 130°C et 150°C. Le palier est maintenu par exemple pendant un intervalle de temps intermédiaire compris entre 30 min et 90 minutes.

Les opérations qui viennent d'être décrites le sont essentiellement à titre illustratif. Les valeurs de gradients, les valeurs de palier et les durées de maintien de chaque pallier peuvent varier en fonction du matériau liant sélectionné et de la température de transition d'état recherchée. Les valeurs données ci-dessus sont particulièrement appropriées pour les résines cyanate ester.

Le nombre d'opérations lui-même peut varier en fonction des caractéristiques de pelabilité souhaitées.

Il est ainsi possible d'obtenir des caractéristiques de pelabilité tout à fait satisfaisantes avec une tenue en température continue d'utilisation de 380°C en mettant en oeuvre les opérations supplémentaires suivantes.

Une quatrième opération intermédiaire consiste à monter la température de l'étuve avec un gradient intermédiaire de montée contrôlée compris par exemple entre 2°C/min et 4°C/min jusqu'à un palier intermédiaire de température comprise entre 190°C et 210°C. Le palier est maintenu pendant un intervalle de temps intermédiaire compris par exemple entre 90 min et 150 minutes.

Une cinquième opération intermédiaire consiste à monter la température de l'étuve avec un gradient intermédiaire de montée contrôlée compris par exemple entre 2°C/min et 4°C/min jusqu'à un palier intermédiaire de température comprise entre 270°C et 290°C. Le palier est maintenu pendant un intervalle de temps intermédiaire compris par exemple entre 90 min et 150 minutes.

Une étape consistant à injecter un gaz neutre dans l'étuve qui limite les risques de carbonisation du matériau liant, permet de réduire le nombre ou la durée des paliers.

Le procédé qui vient d'être expliqué permet d'obtenir la cale d'épaisseur 10 représentée sur la figure. La cale d'épaisseur comprend un empilement de feuilles 1, 2, 3 qui comportent une force de résistance au déchirement prédéterminée, en fonction de leur nature. Les lames métalliques présentent généralement une résistance au déchirement appréciable à partir d'une épaisseur relativement faible. Les nappes tissées en fibres de verre, de carbone ou de polyamides présentent généralement aussi une résistance au déchirement appréciable à partir d'une épaisseur relativement faible.

Les feuilles sont fixées les unes sur les autres par un matériau liant qui procure une force de cohésion entre les feuilles élevée mais inférieure à la force de résistance au déchirement. Dans le cas de lames métalliques, le matériau liant constitue une fine couche d'épaisseur nettement inférieure à celle d'une lame de sorte que l'épaisseur prédominante est celle de la somme des épaisseurs de lames. Dans le cas de nappes tissées, le matériau liant imprègne les nappes de sorte que l'épaisseur prédominante est celle de la somme des épaisseurs de nappes.

Le matériau liant comprend de préférence un polymère de type cyanate ester qui maintient la force de résistance au déchirement et la force de cohésion de manière stable jusqu'à une température de transition d'état Tg supérieure à 200°C, à 380°C voire à 400°C. Tant qu'une température de la cale est inférieure à la température de transition d'état Tg, l'épaisseur de la cale est dans un rapport constant à la quantité de feuilles que la cale contient, grâce à la présence de cyanate ester.

Le matériau liant peut comprendre d'autres résines que les polymères de type cyanate ester, avec ou sans cyanate ester pour obtenir des températures de transition d'état au-delà de 200°C, de 380°C, voire de 400°C.

Parmi ces résines, il existe les polymères de type phénylsilicone ou polyphénylsilsesquioxane, les polymères de type polystyrylpyridine ou encore les géopolymères de type aluminosilicate.

Le procédé peut varier en fonction de du polymère sélectionné pour le matériau liant. Ainsi lorsque le matériau liant est sélectionné parmi les polymères de type époxy combiné avec un additif, de façon à atteindre des températures supérieures à 200°C, deux paliers de température suffisent. Un palier initial de température maintenu à 100°C typiquement pendant une heure puis un palier final de température maintenu à 250°C sans palier intermédiaire, pendant une durée qui varie selon la masse du matériau, permet d'obtenir des cales pelables qui tiennent en continu dans un environnement à 250°C. Des tests concluant ont été faits en maintenant une cale en sortie de fabrication, à 250°C pendant 3000 heures. D'autres additifs que ceux à base de brome ou de bisphénols, peuvent être utilisés.

L'épaisseur initiale et le nombre initial de chaque cale d'épaisseur produite selon l'invention est indiquée. Ainsi, un utilisateur peut aisément calculer au moyen d'une règle de proportionnalité, une quantité de feuilles à enlever pour réduire l'épaisseur de la cale à une valeur souhaitée. Il lui suffit d'appliquer sur une feuille extérieure de l'empilement, un effort supérieur à la force de cohésion pour peler la feuille extérieure sans la déchirer, en d'autres termes intégralement et de réitérer son action jusqu'à avoir pelé la quantité calculée de feuilles à enlever.

L'utilisateur peut ensuite insérer la cale réglée à la bonne épaisseur dans un espace à combler, 1 en étant assuré que la cale maintiendra sa fonction tant que la température de transition d'état pour laquelle elle est prévue, n'est pas dépassée.

## Revendications

1. Cale d'épaisseur (10) comprenant un empilement de feuilles (1, 2, 3) qui comportent une force de résistance au déchirement prédéterminée, fixées les unes sur les autres par un matériau liant qui procure une force de cohésion entre les feuilles élevée mais inférieure à ladite force de résistance au déchirement de sorte qu'un effort supérieur à ladite force de cohésion, appliqué sur une feuille extérieure de l'empilement, permet de peler ladite feuille extérieure sans la déchirer, **caractérisée en ce que** ladite force de résistance au déchirement et ladite force de cohésion sont maintenues jusqu'à une température de transition d'état (Tg) supérieure à 200°C et **en ce que** l'épaisseur de la cale est dans un rapport constant à la quantité de feuilles de la cale tant qu'une température de la cale est inférieure à ladite température de transition d'état (Tg).

2. Cale d'épaisseur selon la revendication 1, **caractérisée en ce que** ladite température de transition d'état (Tg) est supérieure ou égale à 380°C.

3. Cale d'épaisseur selon la revendication 1 ou 2, caractérisée en ce ladite température de transition d'état (Tg) est supérieure ou égale à 400°C.

4. Cale d'épaisseur selon l'une des revendications 1 à 3, **caractérisée en ce que** le matériau liant comprend un polymère de type cyanate ester.

5. Cale d'épaisseur selon l'une des revendications 1 à 3, **caractérisée en ce que** le matériau liant comprend un polymère de type phénylsilicone ou polyphénylsilsesquioxane.

6. Cale d'épaisseur selon l'une des revendications 1 à 3, **caractérisée en ce que** le matériau liant comprend un polymère de type polystyrylpyridine.

7. Cale d'épaisseur selon l'une des revendications 1 à 3, **caractérisée en ce que** le matériau liant comprend une résine époxy combinée avec un additif, notamment à base de brome ou de bisphénols comprenant une chaîne aromatique.

8. Cale d'épaisseur selon l'une des revendications 1 à 3, **caractérisée en ce que** le matériau liant comprend un géopolymère de type aluminosilicate.

9. Cale d'épaisseur selon l'une des revendications 1 à 8, **caractérisée en ce que** les feuilles sont en métal.

10. Cale d'épaisseur selon l'une des revendications 1 à 8, **caractérisée en ce que** les feuilles comprennent des fibres tissées imprégnées du matériau liant.

11. Procédé d'obtention d'une cale d'épaisseur (10) comprenant des étapes consistant à :
- sélectionner un matériau liant comportant une température de transition d'état (Tg) supérieure à 200°C ;
- enduire des feuilles (1, 2, 3) qui comportent une force de résistance au déchirement prédéterminée, avec le matériau liant ;
- empiler les feuilles enduites les unes sur les autres ;
- soumettre l'empilement ainsi obtenu à des cycles de pressions et de températures qui réticulent le matériau liant de façon à procurer une force de cohésion entre les feuilles élevée mais inférieure à ladite force de résistance au déchirement permettant de peler une feuille extérieure de l'empilement sans la déchirer en lui appliquant un effort supérieur à ladite force de cohésion, et de façon à maintenir l'épaisseur de la cale dans un rapport constant à la quantité de feuilles, ladite force de résistance au déchirement et ladite force de cohésion tant qu'une température de la cale est inférieure à ladite température de transition d'état (Tg).

12. Procédé selon la revendication 11, **caractérisée en ce que** le matériau liant est sélectionné parmi les polymères de type époxy combiné avec un additif, notamment à base de brome ou de bisphénols comprenant une chaîne aromatique de façon à atteindre des températures supérieures à 200°C.

13. Procédé selon la revendication 11, **caractérisée en ce que** le matériau liant est sélectionné parmi les polymères de type cyanate ester, les polymères de type phénylsilicone ou polyphénylsilsesquioxane, de type polystyrylpyridine, ou parmi les géopolymères de type aluminosilicate qui permettent d'atteindre une température de transition d'état (Tg) supérieure ou égale à 200°C, notamment supérieure ou égale à 380°C.

14. Procédé selon l'une des revendications 11 à 13, caractérisé en ce la température de transition d'état (Tg) est supérieure ou égale à 400°C.

15. Procédé selon l'une des revendications 11 à 14, **caractérisé en ce que** les étapes consistant à soumettre l'empilement à des cycles de pressions et de températures comprennent des étapes consistant à :
- mettre l'empilement sous presse dans une étuve et monter la température de l'étuve avec un gradient initial de montée contrôlée en fonction de la masse mise en étuve jusqu'à un palier initial de température comprise entre 130°C et 150°C, maintenu pendant un intervalle de temps initial d'autant plus élevé que la masse mise en étuve est élevée ;
- monter la température de l'étuve avec un gradient final de montée contrôlée en fonction de la masse mise en étuve jusqu'à un palier final de température comprise entre 300°C et 320°C, maintenu pendant un intervalle de temps final d'autant plus élevé que la masse mise en étuve est élevée ;
- descendre la température de l'étuve avec un gradient final de descente contrôlée en fonction de la masse mise en étuve jusqu'à température ambiante.

16. Procédé selon la revendication 15, **caractérisé en ce que** les étapes consistant à soumettre l'empilement à des cycles de pressions et de températures comprennent en outre des étapes consistant à :
- descendre à partir du palier initial de température, la température de l'étuve avec un gradient intermédiaire de descente contrôlée en fonction de la masse mise en étuve jusqu'à température ambiante ;
- mettre l'empilement hors presse ;
- monter la température de l'étuve avec un gradient intermédiaire de montée contrôlée en fonction de la masse mise en étuve jusqu'à un palier intermédiaire de température comprise entre 130°C et 150°C, maintenu pendant un intervalle de temps intermédiaire d'autant plus élevé que la masse mise en étuve est élevée.

17. Procédé selon la revendication 15 ou 16, **caractérisé en ce que** les étapes consistant à soumettre l'empilement à des cycles de pressions et de températures comprennent en outre une étape consistant à injecter un gaz neutre dans l'étuve.
